Europäisches Patentamt

European Patent Office

Office européen des brevets

(19)

(11) Numéro de publication: **0 220 128**
**B1**

# FASCICULE DE BREVET EUROPEEN

(12)

(45) Date de publication du fascicule du brevet: **04.07.90**

(51) Int. Cl.⁵: **B 62 B 3/02**

(21) Numéro de dépôt: **86450019.4**

(22) Date de dépôt: **16.09.86**

(54) **Chariot de manutention pliable à usages multiples.**

(30) Priorité: **16.09.85 FR 8513786**

(43) Date de publication de la demande:
**29.04.87 Bulletin 87/18**

(45) Mention de la délivrance du brevet:
**04.07.90 Bulletin 90/27**

(84) Etats contractants désignés:
**CH DE GB IT LI NL**

(56) Documents cités:
**DE-A-2 033 855**
**DE-A-2 635 238**
**DE-A-2 651 039**
**DE-A-2 732 757**
**FR-A-2 366 971**

(73) Titulaire: **Rol, Jean**
**Lauzin**
**F-47220 Astaffort (FR)**

(73) Titulaire: **Rol née Luciani, Marcelle**
**Lauzin**
**F-47220 Astaffort (FR)**

(73) Titulaire: **Luciani, José**
**88, rue Oued Ziz**
**Rabat Agdal (MA)**

(72) Inventeur: **Rol née Luciani, Marcelle**
**Lauzin**
**F-47220 Astaffort (FR)**

(74) Mandataire: **Trolliet, Jean-Claude**
**Cabinet BURDIPAT 20, cours du Chapeau Rouge**
**F-33000 Bordeaux (FR)**

Courier Press, Leamington Spa, England.

EP 0 220 128 B1

## Description

La présente invention concerne un chariot de manutention pliable à multiples usages, tels que support de réceptacle, table mobile ou diable. Selon le préambule de la revendication 1.

On connaît par le brevet FR—A—2 537 077 un chariot de manutention pliable comportant un réceptacle dont les faces latérales sont repliables reposant sur une assise dotée de béquilles réglables en hauteur pouvant se rabattre sur et sous l'assise support de réceptacle, les béquilles étant dotées chacune en leur extrémité de roues fixes ou mobiles permettant le déplacement dudit chariot et des roues mobiles fixées sous l'assise permettant une fois les béquilles rabattues à tour de rôle son déplacement dans le coffre d'un véhicule par exemple, et/ou sur le sol, ce genre de réalisation bien que présentant certains avantages notamment au niveau des manutentions lors d'achats effectués dans les grandes ou petites surfaces par exemple a certains inconvénients tels que sa mise en place dans le coffre d'un véhicule et d'autre part est d'un usage restrictif.

L'invention a pour but de pallier aux inconvénients précédemment exposés.

L'invention a alors pour objet un chariot pliable de manutention comportant une assise prolongée par quatre béquilles repliables jumélées deux par deux réglables en hauteur, les béquilles avant et arrière étant repliables de l'avant à l'arrière de l'assise, elles sont dotées en leur extrémité d'un jeu de roues fixes ou mobiles, caractérisé en ce que chaque béquille au niveau de son articulation de part et d'autre de l'assise se prolonge vers l'avant de ladite assise par un bras en forme d'équerre, en extrémité de chacun desdits bras sont maintenus des supports réglables d'un deuxième jeu de roues fixes ou mobiles, les béquilles arrières présentant en plus un prolongement en équerre orienté vers l'arrière destiné à engendrer le blocage du chariot une fois que celui-ci repose au sol ou dans le véhicule.

D'autres caractéristiques et avantages de l'invention ressortiront plus clairement de la description faite en regard des dessins joints donnés à titre d'exemple non limitatif, où:

la figure 1 est une vue de côté d'un chariot ses béquilles déployées,

la figure 2, une vue en coupe au niveau des béquilles avant lors de la mise en place du chariot dans le coffre d'une voiture,

la figure 3, le rabattement des béquilles avant,

la figure 4, le rabattement des béquilles arrière,

la figure 5, l'immobilisation du chariot lors de sa mise en place dans le coffre d'un véhicule ou sur un sol quelconque,

la figure 6, un mode d'utilisation en diable,

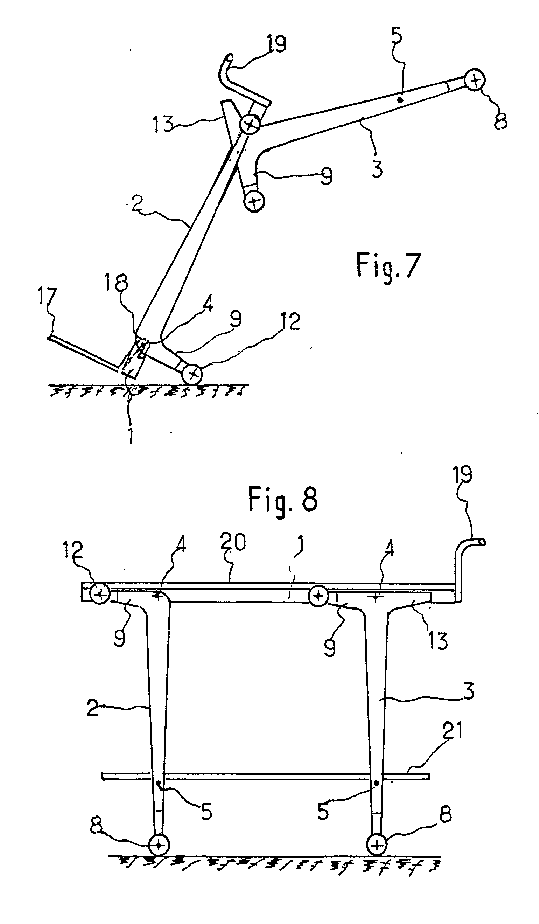

la figure 7, une variante d'utilisation en diable.

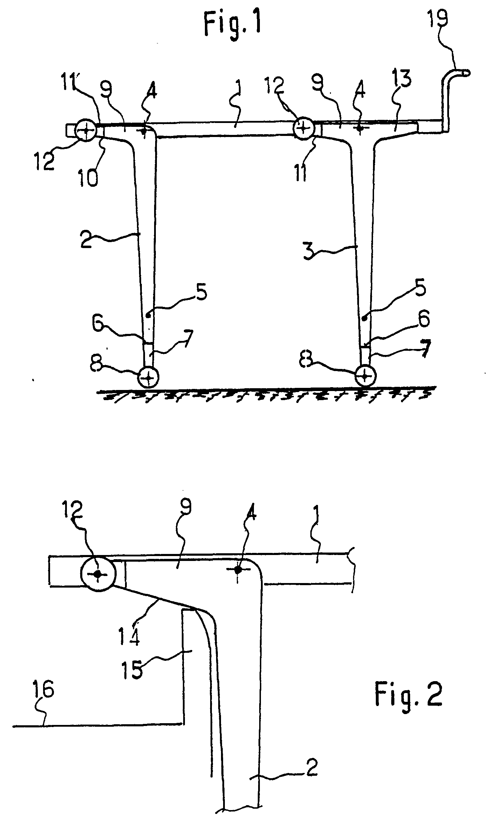

Tel que représenté figure 1, le chariot comporte une assise 1 en forme de cadre généralement rectangulaire, sur ladite assise 1 sont articulées quatre béquilles 2 et 3 au moyen des axes 4, chaque béquille 2 et 3 étant jumélée par l'axe d'articulation 4 et une traverse 5, en leur partie inférieure 6 sont maintenus de manière réglable en hauteur par tous moyens connus les supports 7 d'un premier jeu de roues fixes ou mobiles 8, au niveau de l'articulation 4 des béquilles 2 et 3 de part et d'autre de l'assise 1 ces dernières se prolongent par un bras 9 formant une équerre orientée vers l'avant du chariot, en l'extrémité 10 desdits bras sont maintenus de façon réglable en longueur par des moyens connus des supports 11 d'un second jeu de roues 12, les béquilles 3 présentant outre les bras 9 un prolongement arrière 13 en équerre, les paires de béquilles 2 et 3 sont immobilisées en positions telles que déployée ou intermédiaire ou rabattue, par des moyens connus du type secteur à crans par exemple.

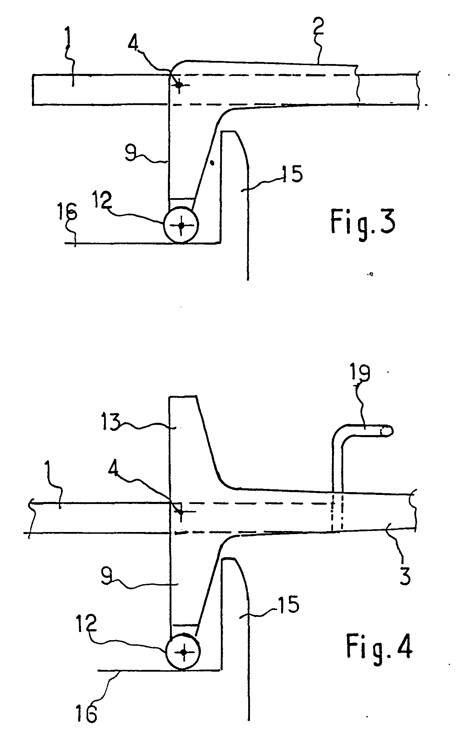

Selon la représentation des figures 2 à 5 lorsque le chariot est utilisé en chariot de manutention tel que support de réceptacle en forme de panier ou table plane, pour son introduction dans le coffre d'un véhicule par exemple, une fois que la hauteur du premier jue de roues 8 des béquilles 2 et 3 a été réglée par rapport à l'articulation 4 de manière à ce que le dessous de l'assise 1 puisse passer au-dessus du haut de la jupe 15 arrière du véhicule et notamment que la face 14 du bras 9 en pente prenne appui de par sa forme sur le haut de la jupe 15, par rotation et rabattement de la paire de béquilles 2 vers l'arrière du chassis 1, le second jeu roues 12 en bout de bras 9 prennent appui sur le plancher 16 du véhicule, la hauteur du second jeu de roues 12 des bras 9 par rapport à l'articulation 4 ayant été au préalable réglée en fonction de la hauteur de la jupe 15 par rapport au plancher 16. Une fois le seconde jeu de roues 12 des béquilles 2 en appui sur le plancher et les béquilles 2 immobilisées, il est aisé d'introduire le chariot à l'intérieur du coffre par simple poussée, jusqu'à la paire de béquilles 3, les bras 9 comme précédemment décrit prennant appui sur le haut de jupe 15 afin de rabattre la paire de béquilles 3 et immobiliser ces dernières lorsque le second jeu de roues 12 sont en appui sur le plancher 16 du véhicule. Lorsque le chariot est mis en place dans le véhicule sont immobilisation est engendrée par la prolongation de la rotation de la paire de béquilles 3 et ce jusqu'à ce que les bras 13 prennent appui sur le plancher 16 du véhicule, pour extraire le chariot du véhicule on procédé de manière inverse de la description précédente.

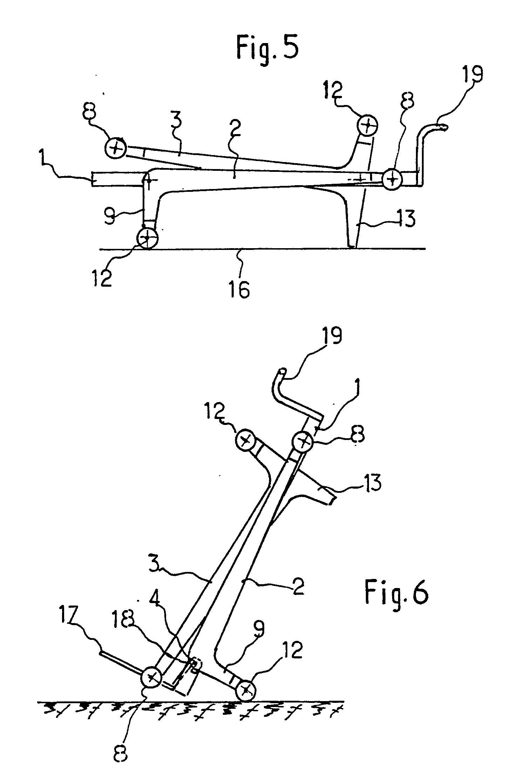

Selon un mode d'utilisation en diable représenté figure 6, sur l'axe d'articulation 4 des béquilles 2 alors que les béquilles 2 et 3 sont rabattues, est rapportée une plateforme amovible 17 présentant des crochets 18 s'emboîtant sur ledit axe 4 assurant le maintien de ladite plateforme 17 support de matière à déplacer, le chariot étant déplacé grâce à l'appui du second jeu de roues 12 des béquilles 2 sur le sol, la préhension du chariot étant effectuée soit par la poignée 19 tel que représenté figure 6 soit par la barre de jonction 5 des béquilles 3 lorsque ces dernières sont déployées et immobilisées à la position désirée.

Selon le mode d'utilisation représenté figure 8 le chariot ayant ses béquilles 2 et 3 déployées reçoit sur son assise 1 un plateau supérieur 20 et les traverses 5 reçoivent un plateau inférieur 21, lesdits plateaux 20 et 21 étant amovibles.

## Revendications

1. Chariot pliable de manutention à multiples usages comportant une assise (1) prolongée par quatre béquilles (2, 3) jumelées deux par deux repliables d'avant en arrière et réglables en hauteur, lesdites béquilles en leur extrémité opposée à leur articulation étant dotées d'un premier jeu de roues (8) fixes ou mobiles, caractérisé par les béquilles (2, 3) au niveau de leur articulation (4) de part et d'autre de l'assise (1) se prolongeant chacune vers l'avant du chariot par un bras (9) en équerre, en extrémité (10) de chaque bras (9) étant maintenu un second jeu de roues (12) fixes ou mobiles, les béquilles arrières (3) présentant en plus un second prolongement en équerre (13) orienté vers l'arrière de telle sorte que lors de la présentation du chariot à l'arrière d'un véhicule la face (14) des bras (9) des béquilles (2) en appui sur le haut de jupe (15) par rotation et rabattement vers l'arrière des béquilles (2) le deuxième jeu de roues (12) prenne appui sur le plancher (16) du véhicule permettant d'introduire le chariot jusqu'à l'appui des bras (9) des béquilles (3) sur le haut de jupe (15), la rotation vers l'arrière des béquilles (3) faisant prendre appui leur second jeu de roues (12) sur le plancher (16) afin de permettre la mise en place dans le véhicule du chariot, ce dernier étant immobilisé par la prolongation de rotation des béquilles (3) faisant prendre appui les prolongements (13) sur le plancher (16) du véhicule.

2. Chariot pliable de manutention selon la revendication 1 caractérisé par le chariot replié recevant sur l'axe d'articulation (4) des béquilles (2) les crochets (18) supports de plateforme (17) engendrant un diable lors de la préhension du chariot par le poignée (19) ou par la barre de jonction (5) des béquilles (3) lors de leur déploiement et immobilisation à la position désirée.

3. Chariot pliable de manutention selon la revendication 1 caractérisé par l'assise (1) recevant de manière amovible un panier ou un plateau supérieur (20) et les traverses (5) un plateau inférieur (21).

4. Chariot pliable de manutention selon la revendication 1 caractérisé par la face (14) des bras (9) présentant une pente permettant l'appui sur le haut de jupe (15) d'un véhicule.

5. Chariot pliable de manutention selon la revendication 1 caractérisé par la hauteur des roues (12) en prolongement des bras (9) réglables en hauteur.

## Patentansprüche

1. Klappbarer Mehrzweckförderwagen bestehend aus einem Boden (1), der durch vier paarweise angeordnete, von vorn nach hinten klappbare und höhenverstellbare Stützen (2, 3) verlängert wird, welche am den Gelenken gegenüberliegenden Ende mit einem ersten Satz fester oder schwenkbarer Räder (8) ausgestattet sind und dadurch gekennzeichnet, daß sie die Stützen (2, 3) in Höhe des Gelenks (4) auf jeder Seite des Bodens (1) nach vorn durch jeweils einen rechtwinklig angebrachten Arm (9) verlängern, wobei sich an den Enden (10) jedes Arms (9) ein zweiter Satz feststehender oder schwenkbarer Räder (12) befindet und die hinteren Stützen (3) außerdem eine zweite rechtwinklige Verlängerung (13) aufweisen, die so nach hinten gerichtet ist, daß beim Heranfahren des Wagens an das Hinterteil eines Fahrzeugs die Seite (14) der Arme (9) der Stützen (2) durch Drehung und Zurückklappen der Stützen (2) am oberen Rand des Fahrzeugaufbaus (15) anliegt und der zweite Satz Räder (12) sich auf dem Boden (16) des Fahrzeugs abstützt, so daß der Wagen bis zum Anschlag der Arme (9) der Stützen (3) auf dem oberen Rand des Fahrzeugaufbaus (15) eingeführt werden kann, wobei durch das Drehen der Stützen (3) nach hinten der zweite Satz Räder (12) auf dem Boden (16) aufliegt, damit der Wagen in das Fahrzeug geschoben werden kann, wobei der Wagen durch weitere Drehung der Stützen (3) blockiert wird, denn die Verlängerungen (13) liegen auf dem Boden (16) des Fahrzeugs auf.

2. Klappbarer Förderwagen nach Anspruch 1, dadurch gekennzeichnet, daß der geklappte Wagen auf der Gelenkachse (4) der Stützen (2) mit Haken (18) ausgestattet wird, die eine Plattform (17) aufnehmen, wodurch der Wagen beim Ergreifen am Griff (19) oder am Verbindungsholmen (5) der Stützen (3) bei deren Entfalten und Blockieren in der gewünschten Stellung zum Sackkarren wird.

3. Klappbarer Förderwagen nach Anspruch 1, dadurch gekennzeichnet, daß der Boden (1) einen abnehmbaren Korb oder eine obere abnehmbare Platte (20) und die Querholmen (5) eine untere abnehmbare Platte (21) aufnehmen können.

4. Klappbarer Förderwagen nach Anspruch 1, dadurch gekennzeichnet, daß die Seite (14) der Arme (9) eine Neigung zum Aufstützen auf den oberen Rand eines Fahrzeugaufbaus (15) zeigt.

5. Klappbarer Förderwagen nach Anspruch 1, dadurch gekennzeichnet, daß die Höhe der Räder (12) in der Verlängerung der Arme (9) verstellbar ist.

## Claims

1. Handling pliable multipurpose truck with a base plate (1) extended by four forks (2, 3) arranged in pairs by two forks repliable from front to back and adjustable in height, these forks, on the opposite end to their articulation, have one first set of fixed or mobile wheels (8), characterized by the fact that forks (2, 3) at the articulation (4) level on both sides of the base plate (1) extend each other towards the front truck by an arm (9) which is square, a second set of fixed or mobile wheels (12) being maintained at the end (10) of each arm (9), and that the back forks (3) have moreover a second extension in square (13) oriented towards the back in such a way that, when the truck is seen at the back of a vehicle, the front (14) of the forks (2) arms (9) supported on the top tube (15) by rotation and tilting towards the forks (2) back, the second set of wheels (12) is supported on the floor (16) of the vehicle allowing to introduce the truck up to the forks (3) arms support (9) on the top of the tube (15), that the rotation of the forks towards the back (3) makes the second set of wheels (12) to be supported on the floor (16) in order to allow the setting of the truck in the vehicle, this latter is immobilized by the extension of the forks (3) rotation which let the prolongations (13) to be supported on the vehicle's floor (16).

2. Handling pliable truck according to Claim 1 characterized by the fact that the folded truck receives on the forks (2) articulation axle (4) the hooks (18) supporting the platform (17) generating a trolley when gripping the truck by the handle (19) or by the forks (3) joining bar (5) when they are spread up and immobilized to the desired position.

3. Handling pliable truck according to Claim 1 characterized by the base plate (1) receiving a movable basket or a higher plate (20) and the crossbars (5) a lower plate (21).

4. Handling pliable truck according to Claim 1 characterized by the front (14) arms (9) showing a slop allowing the support on the top of the vehicle's tube (15).

5. Handling pliable truck according to Claim 1 characterized by the wheels (12) height extended by the arms (9) adjustable in height.

Fig.1

Fig. 2

Fig.3

Fig.4

Fig. 5

Fig.7

Fig. 8